# EUROPEAN PATENT APPLICATION

(11) **EP 3 944 563 A1**
(43) Date of publication of application: **26.01.2022**
(21) Application number: 20823283.5
(22) Date of filing: 17.03.2020
(51) Int. Cl.: H04L 12/28, B60R 16/02, B60R 16/023

(54) **ONBOARD NETWORK SYSTEM**

(30) Priority: 10.06.2019 JP 2019108202
(71) Applicant: MAZDA MOTOR CORPORATION, Hiroshima 730-8670 (JP)
(72) Inventor: KUROKAWA, Yoshimasa, Aki-gun, Hiroshima 730-8670 (JP); YAMASHITA, Tetsuhiro, Aki-gun, Hiroshima 730-8670 (JP)
(74) Representative: Frick, Robert
(86) International application number: PCT/JP2020/011616
(87) International publication number: WO 2020/250529

(57) **Abstract**

An on-board network system includes: a main arithmetic unit (100); a plurality of communication paths (R1 to R4) extending in different directions toward respective portions of a vehicle body; a plurality of sub-arithmetic units (65, 66, and 81 to 83) on the communication paths (R1 to R4); and a storage device (110) storing a priority order of communications according to a type of communication data. At a disturbance of one of the communication paths connected to one of the sub-arithmetic units, the main arithmetic unit (100) reduces communications having a priority lower than a predetermined criterion and assigns, to the area with the communications reduced, communication data having a priority higher than the predetermined criterion among the communication data in the one of communication paths disturbed to continue communications in the other communication paths.

## Description

### TECHNICAL FIELD

The present disclosure belongs to the technical field related to an on-board network system.

### BACKGROUND ART

Patent Document 1 discloses providing a plurality of domains divided in accordance with the functions of on-board devices, and a plurality of domain controllers for the respective domains, and controlling the domain controllers using an integrated controller. According to Patent Document 1, for example, unit controllers are achieved by one or more ECUs, which are connected by a hierarchical network.

### CITATION LIST

### PATENT DOCUMENT

[Patent Document 1] Japanese Unexamined Patent Application Publication No. 2017-061278

### SUMMARY OF THE INVENTION

### TECHNICAL PROBLEM

It is generally known that a failure or an abnormality may occur in a part of a network system to cause a disturbance of a part of a communication path. In this case, in a configuration as in Patent Document 1, the communications from the integrated controller or the domain controllers to the ECUs that control the in-vehicle equipment may be jammed.

The present disclosure was made in view of the problem. It is an objective of the present disclosure to reduce the loss of main functions at a disturbance of a part of an on-board network.

### SUMMARY OF THE INVENTION

In order to achieve the objective, the technique disclosed herein is directed to an on-board network system. The on-board network system includes: a main arithmetic unit configured to perform an arithmetic calculation related to traveling of a vehicle; a plurality of communication paths extending in different directions from the main arithmetic unit toward respective portions of a body of the vehicle; a plurality of sub-arithmetic units on the communication paths, each of the sub-arithmetic units being configured to control an on-board device to be controlled; a storage device storing a priority order of communications according to a type of communication data transmitted through the communication paths; at least one of the sub-arithmetic units being connected to the main arithmetic unit via different two of the communication paths; and the main arithmetic unit being configured to, at a disturbance of one of the communication paths connected to the one of the sub-arithmetic units, reduce communications having a priority lower than a predetermined criterion and assign, to the area with the communications reduced, communication data having a priority higher than the predetermined criterion among the communication data transmitted in the one of communication paths disturbed, to continue communications in the other communication paths.

With this configuration, the main arithmetic unit and one of the sub-arithmetic units are connected via the plurality of communication paths. Accordingly, even at a disturbance of one of the communication paths, communications continue between the main arithmetic unit and the one of the sub-arithmetic units via the other communication paths. At a disturbance of one of the communication paths, communications having a priority lower than the predetermined criterion are reduced in the other undisturbed communication paths, and communication data having a priority higher than the predetermined criterion among the communication data transmitted in the disrupted communication path is assigned to the area with the reduced communications. This reduces the loss of the functions having a relatively high priority, what is called the "main functions".

### ADVANTAGES OF THE INVENTION

As described above, the technology disclosed herein provides the plurality of communication paths between the main arithmetic unit and one of the sub-arithmetic units, and assigns, even at a disturbance of one of the communication paths, communications based on the priority order according to the type of communication data in the other communication paths. This reduces the loss of the main functions at a disturbance of a part of the on-board network.

### BRIEF DESCRIPTION OF THE DRAWINGS

FIG. 1 is a block diagram showing a control system of a motor vehicle.
FIG. 2 is a view showing a schematic configuration of a network at the front of the vehicle.
FIG. 3 is a view showing an example priority order according to communication types.
FIG. 4 is a view illustrating control of traffic of the network system.
FIG. 5 is a view illustrating control of traffic of the network system.

### DESCRIPTION OF EMBODIMENT

An exemplary embodiment will now be described in detail with reference to the drawings.

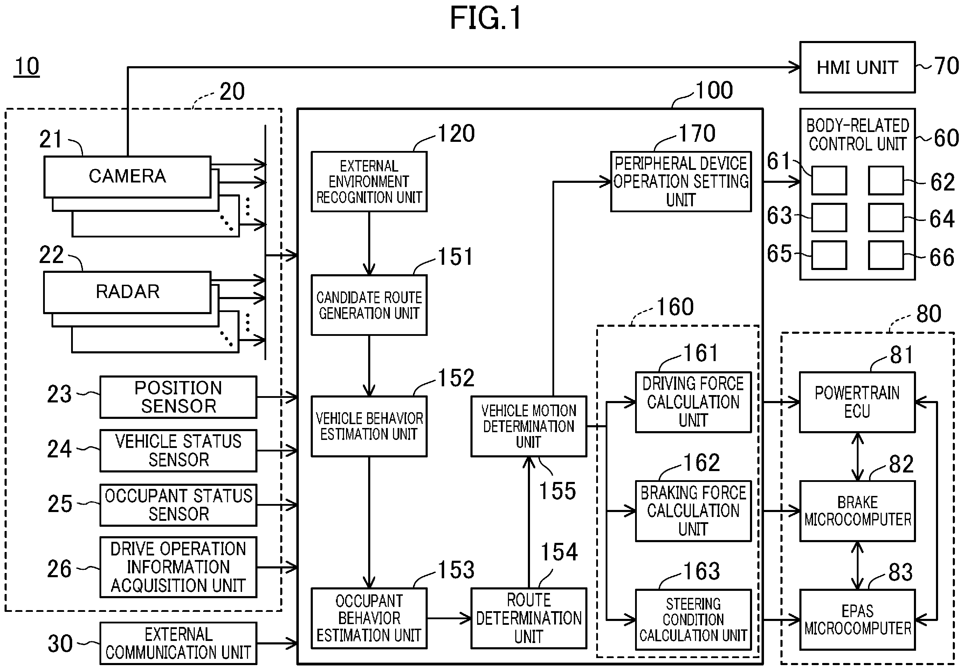

FIG. 1 is a block diagram schematically showing a configuration of a control system of a vehicle 10 according to the present embodiment. The vehicle 10 allows assisted driving and autonomous driving.

To achieve the assist driving and autonomous driving, the vehicle 10 of the present embodiment includes a main arithmetic unit 100 that calculates a route to be traveled by the vehicle 10 and determines motions of the vehicle 10 so that the vehicle 10 follows the route, based on outputs from sensing devices 20 and/or on information from a network outside the vehicle. The main arithmetic unit 100 is a microprocessor configured by one or more chips, and includes a CPU, and a memory, for example. Note that FIG. 1 mainly shows a configuration to exert the route generating function of the present embodiment, and does not necessarily show all the functions the main arithmetic unit 100 has.

The sensing devices 20 that output information to the main arithmetic unit 100 include, for example, (1) a plurality of cameras 21, (2) a plurality of radars 22, (3) a position sensor 23, (4) a vehicle status sensor 24, (5) an occupant status sensor 25, and (6) a driving operation information acquisition unit 26. The cameras 21 are arranged on the body or other parts of the vehicle 10 and capture images of the vehicle external environment. The radars 22 are arranged on the body or other parts of the vehicle 10 and detect objects, for example, outside the vehicle. The position sensor 23 detects the position of the vehicle 10 (i.e., obtains vehicle position information) utilizing a global positioning system (GPS).The vehicle status sensor 24 includes outputs of sensors such as a vehicle speed sensor, an acceleration sensor, and a yaw rate sensor, for example, detecting the behavior of the vehicle, and obtains the information on the conditions of the vehicle 10. The occupant status sensor 25 includes in-vehicle cameras, for example, and obtains the information on the conditions of an occupant(s). The driving operation information acquisition unit 26 is for detecting the driving operation of the driver. In addition, the main arithmetic unit 100 receives communication information from another vehicle around the subject vehicle 10 and/or traffic information from a navigation system through an external communication unit 30 connected to a network outside the vehicle. The sensing devices 20 are examples of the in-vehicle equipment.

The cameras 21 are arranged to image the surroundings of the vehicle 10 at 360° in the horizontal direction. Each of the cameras 21 outputs the generated image data to the main arithmetic unit 100. The image data obtained by each camera 21 is input not only to the main arithmetic unit 100, but also to a human machine interface (HMI) unit 70. The HMI unit 70 displays information based on the image data obtained, on a display device or the like in the vehicle.

Like the cameras 21, the radars 22 are arranged so that the detection range covers 360° of the vehicle 10 in the horizontal direction. Note that the type of the radars 22 is not particularly limited. For example, millimeter wave radars or infrared radars are applicable.

The main arithmetic unit 100 determines a target motion of the vehicle 10 based on outputs from the sensing devices 20 (e.g., the cameras 21 and the radars 22) and/or on information received from a network outside the vehicle, calculates a driving force, a braking force, and steering amounts for realizing the determined target motion, and outputs the results of the calculation to a control unit 80 that controls an engine, a brake, or the like.

The main arithmetic unit 100 includes an external environment recognition unit 120, a candidate route generation unit 151, a vehicle behavior estimation unit 152, an occupant behavior estimation unit 153, a route determination unit 154, a vehicle motion determination unit 155, and a physical amount calculation unit 160.

In order to set the target motion of the vehicle 10, the external environment recognition unit 120 recognizes the vehicle external environment based on the outputs from the sensing devices 20 such as the cameras 21 and/or the information input from the external communication unit 30. For example, the external environment recognition unit 120 recognizes what an object outside the vehicle is, based on the image data received from the cameras 21 and/or the peak list of reflected waves received from the radars 22, for example. Specifically, the external environment recognition unit 120 detects an object outside the vehicle based on the image data and/or the peak list and identifies the object outside the vehicle, using identification information or other information in a database or the like stored in the main arithmetic unit 100.

The external environment recognition unit 120 compares three-dimensional information around the vehicle 10 with an external environment model based on the information on the recognized objects outside the vehicle to recognize the vehicle external environment including roads and obstacles and create a map. The external environment recognition unit 120 recognizes the roads, obstacles, and other objects with respect to the three-dimensional information around the vehicle, and identifies a free space, that is, an area without any object, based on the information on the recognized objects outside the vehicle. Used in this processing is a learned model that is an external environment model trained by deep learning, for example. The external environment recognition unit 120 generates a two-dimensional map representing the free space and combines the generated two-dimensional map with the positioning information on the objects to generate the three-dimensional map representing the surroundings of the vehicle 10. In this process, information on the installation positions and imaging directions of the cameras 21, and information on the installation positions and the transmission directions of the radars 22 are used. The external environment recognition unit 120 compares the generated three-dimensional map with the external environment model to recognize the vehicle external environment including roads and obstacles and outputs the results of the recognition to the candidate route generation unit 151. In the deep learning, a multilayer neural network (e.g., a deep neural network (DNN)) is used, for example. An example of the multilayer neural network is convolutional neural network (CNN).

The candidate route generation unit 151 calculates one or more candidate routes that can be traveled by the vehicle 10 in accordance with the vehicle external environment recognized by the external environment recognition unit 120. Specifically, the candidate route generation unit 151 generates the candidate routes that can be traveled by the vehicle 10 based on the outputs of the external environment recognition unit 120, the outputs of the position sensor 23, the information received from an external network, for example, via the external communication unit 30, for example.

The vehicle behavior estimation unit 152 estimates the behavior of the vehicle 10 based on the outputs from the vehicle status sensor 24. Specifically, the vehicle behavior estimation unit 152 generates a six-degrees-of-freedom (i.e., 6DoF) model of the vehicle indicating the behavior of the vehicle based on the outputs from the vehicle status sensor 24. The vehicle status sensor 24 measures the conditions of the vehicle 10 and includes sensors, such as the vehicle speed sensor, the acceleration sensor, and the yaw rate sensor, detecting the behavior of the vehicle 10.

The occupant behavior estimation unit 153 estimates the behavior of the occupant(s) of the vehicle 10 based on the outputs from the occupant status sensor 25. The occupant behavior estimation unit 153 estimates the driver's health conditions and emotion from the results of the detection of the occupant status sensor 25. The occupant status sensor 25 is a bio-information sensor, for example, including a skin temperature sensor, a heartbeat sensor, a blood flow sensor, and a perspiration sensor, for example. Examples of the health conditions of the driver include good condition, slightly tired condition, poor condition, and less conscious condition. The emotions include, for example, fun, normal, bored, annoyed, uncomfortable, and the like.

The route determination unit 154 determines the route to be traveled by the vehicle 10 based on the outputs from the occupant behavior estimation unit 153. If only one route is generated by the candidate route generation unit 151, the route determination unit 154 determines this route as the route to be traveled by the vehicle 10. If the candidate route generation unit 151 generates a plurality of routes, a route that an occupant (in particular, the driver) feels most comfortable with, that is, a route that the driver does not perceive as a redundant route, such as a route too cautiously avoiding obstacles, is selected out of the plurality of candidate routes, in consideration of an output from the occupant behavior estimation unit 153.

The vehicle motion determination unit 155 determines a target motion of the vehicle 10 for following the traveling route determined by the route determination unit 154. The target motion means, for example, steering and acceleration/deceleration for travelling following the traveling route. In addition, with reference to the 6DoF model of the vehicle, the vehicle motion determination unit 155 calculates the motion of the vehicle body for the traveling route selected by the route determination unit 154.

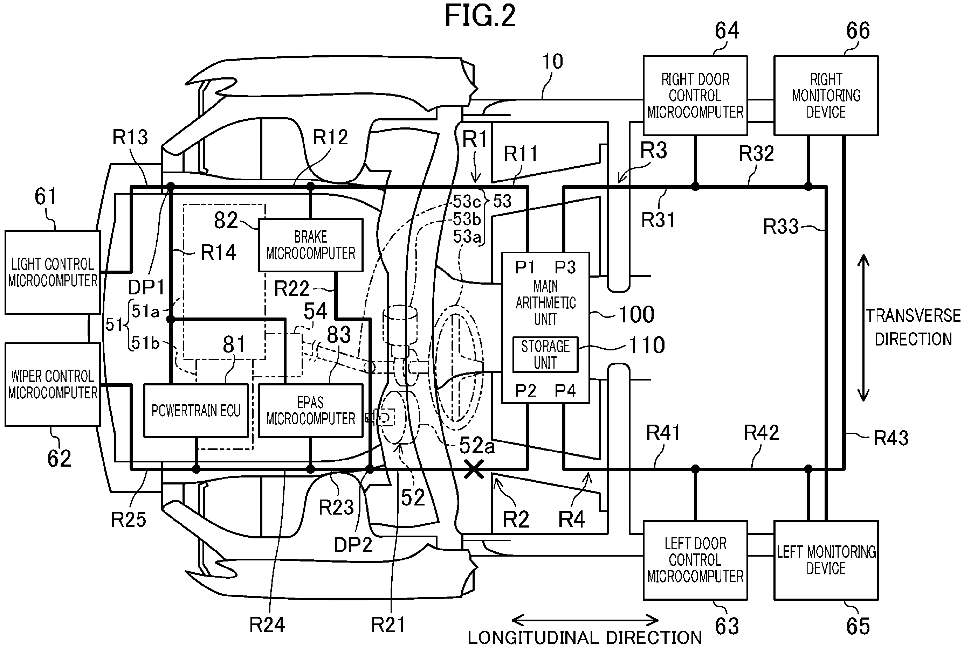

The physical amount calculation unit 160 calculates the driving force, the braking force, and the steering amounts for achieving the target motion, and includes a driving force calculation unit 161, a braking force calculation unit 162, and a steering amount calculation unit 163. To achieve the target motion, the driving force calculation unit 161 calculates the target driving force to be generated by a powertrain device 51 (see e.g., FIG. 2) such as an engine 51a and a transmission 51b. To achieve the target motion, the braking force calculation unit 162 calculates the target braking force to be generated by a brake system 52 (see e.g., FIG. 2) including a master back 52a. To achieve the target motion, the steering amount calculation unit 163 calculates the target steering amounts to be generated by a steering system 53 (see e.g., FIG. 2) including a steering wheel 53a, an EPAS motor system 53b, a gear shift 53d, and a steering shaft 53c. In FIG. 2, reference numeral 54 denotes a gear box.

The main arithmetic unit 100 further includes a peripheral device operation setting unit 170 that sets operations of body-related devices of the vehicle 10, such as lamps and doors, based on outputs from the vehicle motion determination unit 155.

The results of the calculation by the main arithmetic unit 100 are output to the control unit 80 and a body-related control unit 60.

The control unit 80 includes a powertrain ECU 81, a brake microcomputer 82, and an electric power assisted steering (EPAS) microcomputer 83. Specifically, information related to the target driving force calculated by the driving force calculation unit 161 is input to the powertrain ECU 81. Information related to the target braking force calculated by the braking force calculation unit 162 is input to the brake microcomputer 82. Information related to the target steering amounts calculated by the steering amount calculation unit 163 is input to the EPAS microcomputer 83. Information on the respective operations of the body-related devices set by the peripheral device operation setting unit 170 is input to the body-related control unit 60. The powertrain ECU 81, the brake microcomputer 82, and the EPAS microcomputer 83 are examples of the sub-arithmetic units.

Although not shown in detail, the powertrain ECU 81 basically calculates the timing of the fuel injection by injectors and timing of ignition by spark plugs to achieve the target driving force, and outputs control signals to these devices for travel. The brake microcomputer 82 basically calculates the controlled variables of an brake actuator to achieve the target braking force, and outputs control signals to the brake actuator. The EPAS microcomputer 83 basically calculates the amount of current to be supplied to the EPAS device to achieve the target steering amounts, and outputs control signals to the EPAS device. The devices for travel, the brake actuator, and the EPAS device are examples of the in-vehicle equipment. Also, the devices for travel are examples of the powertrain device, whereas the brake actuator is an example of the brake system.

The body-related control unit 60 includes a plurality of microcomputers corresponding to the body-related devices and the arithmetic units (hereinafter collectively referred to as the "arithmetic units") including the microcomputers to control the respective devices. In the present embodiment, as the arithmetic units included in the body-related control unit 60, a light control microcomputer 61 for controlling lights, a wiper control microcomputer 62 for controlling windshield wipers, a left door control microcomputer 63 for controlling a left door(s), a right door control microcomputer 64 for controlling a right door(s), a left monitoring device 65 that monitors the left of the vehicle, and a right monitoring device 66 that monitors the right of the vehicle are exemplified. However, the body-related control unit 60 is not limited thereto. The light control microcomputer 61, the wiper control microcomputer 62, the left door control microcomputer 63, the right door control microcomputer 64, the left monitoring device 65, and the right monitoring device 66 are examples of the sub-arithmetic units.

FIG. 2 shows an example connection between the main arithmetic unit 100 and each of the arithmetic units 61 to 64 and 81 to 83 of the body-related control unit 60 and the control unit 80, respectively. In other words, FIG. 2 shows a configuration example of an on-board network system including the main arithmetic unit 100, the body-related control unit 60, and the control unit 80.

As shown in FIG. 2, the on-board network system includes a plurality of communication paths R1 to R4 extending radially from the main arithmetic unit 100. Specifically, FIG. 2 shows an example where the communication path R1 is connected to a terminal P1 of the main arithmetic unit 100, the communication path R2 is connected to a terminal P2, the communication path R3 is connected to a terminal P3, and the communication path R4 is connected to a terminal P4. Used for the communication paths R1 to R4 are wire harnesses, for example. Hubs for forming the network are neither shown in FIG. 2 nor described in the present embodiment.

The communication path R1 is connected to the brake microcomputer 82, the powertrain ECU 81, the EPAS microcomputer 83, and the light control microcomputer 61. The communication path R1 includes paths R11 to R14. The path R11 connects the main arithmetic unit 100 and the brake microcomputer 82. The path R12 connects the path R11 and a branching point DP1. The path R13 connects the branch point DP1 and the light control microcomputer 61. The path R14 connects (i) the branch point DP1 and (ii) the powertrain ECU 81 and the EPAS microcomputer 83.

The communication path R2 is connected to the brake microcomputer 82, the EPAS microcomputer 83, the powertrain ECU 81, and the wiper control microcomputer 62. The communication path R2 includes paths R21 to R25. The path R21 connects the main arithmetic unit 100 and a branch point DP2. The path R22 connects the branch point DP2 and the brake microcomputer 82. The path R23 connects the branch point DP2 and the EPAS microcomputer 83. The path R24 connects the path R23 and the powertrain ECU 81. The path R25 connects the path R24 and the wiper control microcomputer 62.

That is, the powertrain ECU 81, the brake microcomputer 82, and the EPAS microcomputer 83 are connected to the main arithmetic unit 100 via the two communication paths R1 and R2. The powertrain ECU 81, the brake microcomputer 82, and the EPAS microcomputer 83 are examples of the first sub-arithmetic units. Note that the first sub-arithmetic units (i.e., the powertrain ECU 81, the brake microcomputer 82, and the EPAS microcomputer 83) may be connected to the main arithmetic unit 100 via three or more communication paths.

The communication path R3 is connected to the right door control microcomputer 64, the right monitoring device 66, and the left monitoring device 65. The communication path R3 includes path R31 to R33. The path R31 connects the main arithmetic unit 100 and the right door control microcomputer 64. The path R32 connects the path R31 and the right monitoring device 66. The path R33 connects the path R32 and the left monitoring device 65.

The communication path R4 is connected to the left door control microcomputer 63, the left monitoring device 65, and the right monitoring device 66. The communication path R4 includes path R41 to R43. The path R41 connects the main arithmetic unit 100 and the left door control microcomputer 63. The path R42 connects the path R41 and the left monitoring device 65. The path R43 connects the path R42 and the right monitoring device 66. The left and right monitoring devices 65 and 66 are examples of the first sub-arithmetic units.

The powertrain ECU 81, the brake microcomputer 82, and the EPAS microcomputer 83 are connected to each other via a communication path not via the main arithmetic unit 100, share information related to the controlled variables of the devices for travel, and allow control causing these devices to cooperate with each other.

For example, while a road surface is slippery, the need arises to reduce the rotation of the wheels (to perform so-called traction control) to prevent the wheels from spinning. To reduce the spinning of the wheels, the output of the powertrain may be reduced, or the braking force of the brake system may be used. However, since the powertrain ECU 81 and the brake microcomputer 82 are communicative with each other, a suitable measure can be taken utilizing both of the powertrain and the brake system.

Further, for example, in cornering of the vehicle 10, the controlled variables of the powertrain and the brake system (including the DSC system) are finely adjusted in accordance with the target steering amounts, whereby rolling and pitching in which the front of the vehicle 10 sinks are generated in synchronization with each other, and the diagonal roll posture can be generated. The generated diagonal rolling increases the load applied to the outer front wheels, allowing the vehicle to corner at a small steering amount and reducing the rolling resistance to the vehicle 10.

As described above, in the example shown in FIG. 2, the brake microcomputer 82 and the EPAS microcomputer 83 are connected to each other using parts of the communication paths R1 and R2. In this manner, the number and region of the wires can be reduced by sharing the communication paths for use. However, the configuration is not limited to the one shown in FIG. 2, and the powertrain ECU 81, the brake microcomputer 82, and the EPAS microcomputer 83 may be connected to each other by dedicated communication wires. Accordingly, the communications among the powertrain ECU 81, the brake microcomputer 82, and the EPAS microcomputer 83 are not influenced by the other communications.

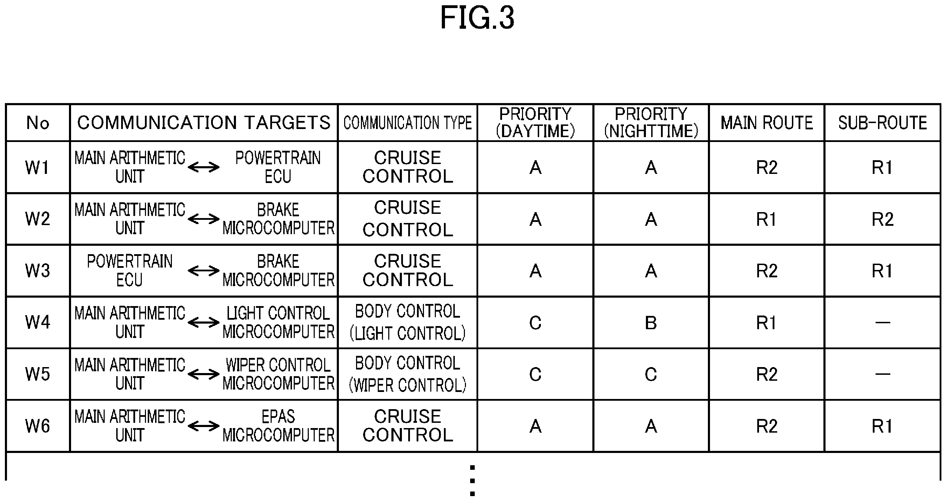

As shown in FIG. 3, in the network system, the priority order according to communication types is set in advance for the communications between the main arithmetic unit 100 and each of the arithmetic units 61 to 66 and 81 to 83 and between pairs of the arithmetic units 61 to 66 and 81 to 83. The priority order is set based on the criteria such as the importance of the communication content, the degree of influence in case of thinning, the degree of contribution to the safety, and whether the recovery is possible without information. More specifically, for example, the priority order according to the control type is set, in order from the highest priority, cruise control, control related to advanced driver-assistance systems (ADAS), control related to the body such as wipers and lights, and control of entertainment devices such as audio equipment. Among the cruise controls, the braking control (i.e., the stop operation of the vehicle) has the highest priority, and the steering control (i.e., the turning operation of the vehicle) and the drive control (i.e., the travel operation of the vehicle) have the second highest priority. Among the ADAS-related controls, the control related to braking such as automatic braking has the highest priority, and the control related to steering and the control related to driving have the second highest priority. With respect to the priorities of the sensing devices 20, the communications of the sensing devices 20 influencing the control performance of the vehicle 10 have a higher priority. For example, assume that the cameras 21 and the radars 22 exhibit, in collaboration, the performance of the ADAS-related control which is provided even at a disturbance of the communications of one of the cameras 21 or the radars 22. In this case, a higher priority is set to the communications with one of the sensors of the cameras 21 or the radars 22 whose performance may deteriorate at a higher degree.

In FIG. 3, reference characters "A", "B", and "C" are assigned in descending order of the priority. In the following description, the arithmetic units 61 to 66 and 81 to 83 may be collectively and simply referred to as "sub-arithmetic units" for the sake of simplicity. On the other hand, the powertrain ECU 81, the brake microcomputer 82, and the EPAS microcomputer 83 connected to the main arithmetic unit 100 via the two communication paths R1 and R2 may be collectively referred as "first sub-arithmetic units" to be distinguished from the "sub-arithmetic units". That is, the sub-arithmetic unit may include both the arithmetic units connected to the main arithmetic unit 100 via a plurality of communication paths like the first sub-arithmetic units, and the arithmetic units connected to a single communication path.

For example, in FIG. 3, the row W1 shows, among the communications between the main arithmetic unit 100 and the powertrain ECU 81, the priority order of the communication type "cruise control". The "cruise control" is related to the traveling of the vehicle 10, such as the driving force, the braking force, and the steering amounts. The "cruise control" is one of the "main functions" of the vehicle 10 and has, among the controls, a significantly high priority which is thus set to "A".

Similarly, A is set, as the priority representing the importance of the communications, to the communications for the "cruise control" between the main arithmetic unit 100 and the brake microcomputer 82 (see the row W2), the communications for the "cruise control" between the powertrain ECU 81 and the brake microcomputer 82 (see the row W3), and the communications for the "cruise control" between the main arithmetic unit 100 and the EPAS microcomputer 83 (see the row W6).

On the other hand, the communications for the body-related controls, for example, the "wiper control" between the main arithmetic unit 100 and the wiper control microcomputer 62 have a lower priority than those for the "cruise control". The priority is thus set to "C" (see the row W5). Similarly, the communications for the "light control", which is one of the body-related controls, between the main arithmetic unit 100 and the light control microcomputer 61 have a lower priority than those for the "cruise control" (see the row W4). However, the "light control" in nighttime driving has a higher priority than the "wiper control" in view of the safety. Accordingly, the "light control" has, in the nighttime, the priority "B" higher than "C" of the "wiper control" and, in the daytime, "C" the same as that of the "wiper control". In this manner, a plurality of priority orders may be set for a single communication type in accordance with the traveling scene or traveling conditions, for example.

As described above, the main arithmetic unit 100 and each of the first sub-arithmetic units are connected to each other via the two communication paths R1 and R2. Here, as shown in FIG. 3, which of the two communication paths R1 and R2 is to be used as the main communication path for the first sub-arithmetic units may be determined in advance. FIG. 3 shows the mainly used communication path as the "main route", and a sub-communication path used at a disturbance somewhere in the communication paths, for example, as a "subroute".

The priority orders are stored in a storage unit 110 of the arithmetic unit 100, for example. The storage form of the priority orders is not particularly limited. However, the priority orders are stored as a table as shown in FIG. 3, for example. The storage unit 110 is an example of the storage device.

The area for storing the priority orders (e.g., as a table) is not limited to the storage unit 110 of the arithmetic unit 100. For example, the priority orders may be stored in each of hubs (not shown) constituting the network in addition to or instead of the arithmetic unit 100 for reference. The hubs storing the priority orders described above are examples of the storage device.

### (Control 1 of Traffic)

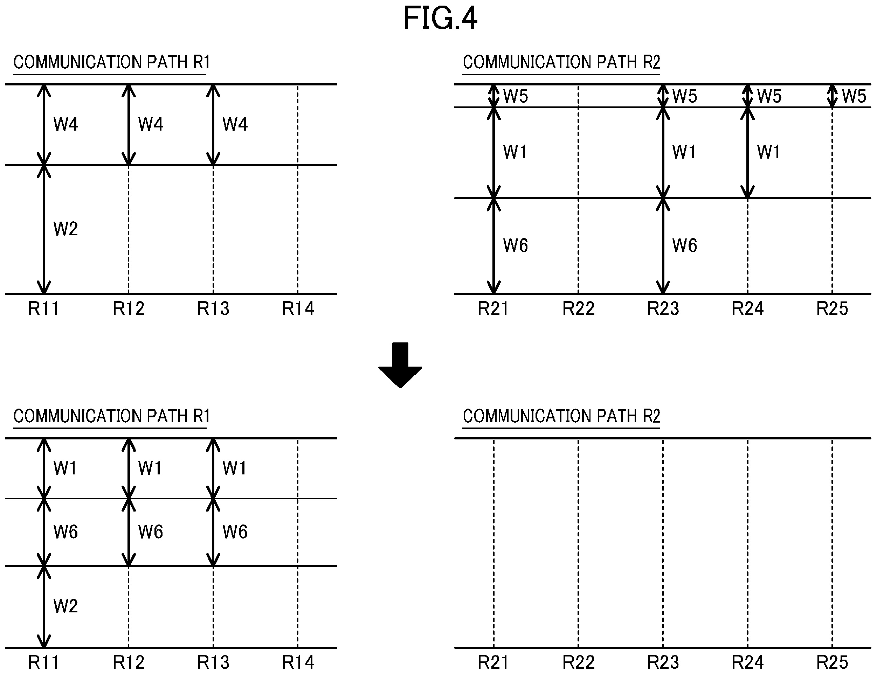

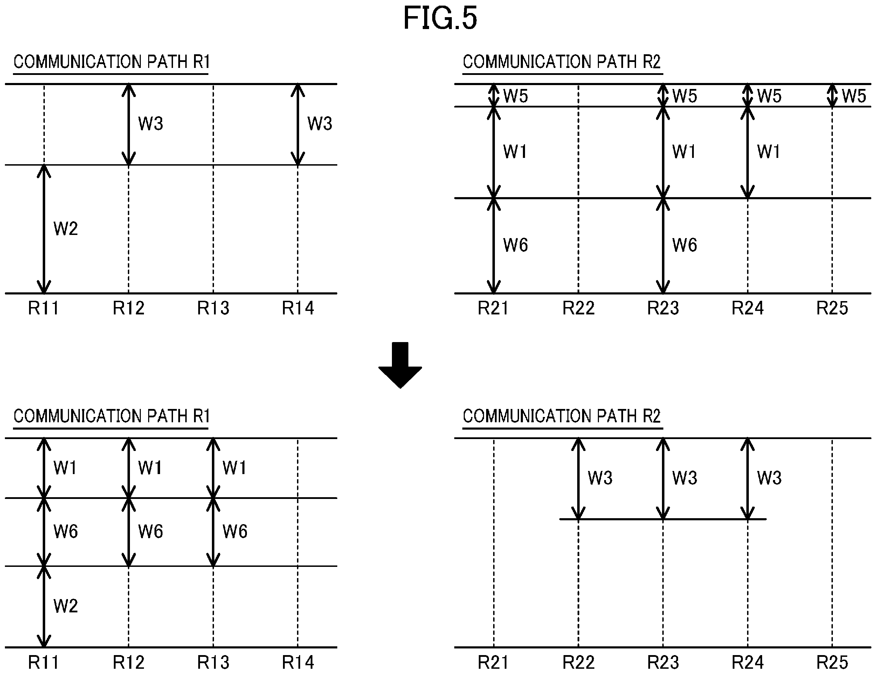

Next, the control of traffic in the network system will be described with reference to FIG. 4. The upper stage of FIG. 4 shows example traffic where no communication disturbance occurs in the radial on-board network system shown in FIG. 2. The lower stage shows example traffic at a communication disturbance in the communication path R21 (see the mark x in FIG. 2). In FIG. 4, the length of the arrow corresponds to the traffic. The communications are stopped among the powertrain ECU 81, the brake microcomputer 82, and the EPAS microcomputer 83. That is, no communication is established in the row W3 in FIG. 3. In FIG. 4 as well as FIG. 5, which will be described later, W1 to W6 correspond to the communication contents in the rows W1 to W6 in FIG. 3. For the sake of simplicity, the same reference characters as those indicating the rows in FIG. 3 are assigned to the communication data.

As shown in the upper stage of FIG. 4, if there is no communication disturbance, transmitted to the communication path R1 are: communication data W2 between the main arithmetic unit 100 and the brake microcomputer 82; and communication data W4 between the main arithmetic unit 100 and the light control microcomputer 61. Transmitted to the communication path R2 are: communication data W6 between the main arithmetic unit 100 and the EPAS microcomputer 83; communication data W1 between the main arithmetic unit 100 and the powertrain ECU 81; and communication data W5 between the main arithmetic unit 100 and the wiper control microcomputer 62.

As shown in the lower stage of FIG. 4, at a communication disturbance in the communication path R21, the main arithmetic unit 100 stops the communications (of the communication data W4) with the light control microcomputer 61 in the communication path R1 based on the priority order. In the communication path R1, the main arithmetic unit 100 reduces the traffic (of the communication data W2) with the brake microcomputer 82 to expand a vacant communication band. In addition, the main arithmetic unit 100 transmits the communication data W1 between the main arithmetic unit 100 and the powertrain ECU 81 and the communication data W6 between the main arithmetic unit 100 and the EPAS microcomputer 83, which have been transmitted via the disturbed communication path R2, via the other communication path R1. The transmission of the communication data W5 is stopped between the main arithmetic unit 100 and the wiper control microcomputer 62 based on the priority order.

This reduces the loss of the "cruise control" functions, which are the main functions, at a disturbance of a part of the on-board network. At a communication disturbance (in the lower stage of FIG. 4), the traffic of the communication data W1 or W6 may be reduced in accordance with the priority order, for example.

### (Control 2 of Traffic)

Next, other control of the traffic of the network system will be described with reference to FIG. 5. Like in FIG. 4, the upper stage of FIG. 5 shows example traffic where no communication disturbance occurs, whereas the lower stage shows example traffic at a communication disturbance in the communication path R21 (see the mark x in FIG. 2). Unlike in FIG. 4, the upper stage of the figure assumes that the communications are stopped between the main arithmetic unit 100 and the light control microcomputer 61 (corresponding to W4 in FIG. 3), and the communications are established between the powertrain ECU 81 and the brake microcomputer 82 (corresponding to W3 in FIG. 3).

As shown in the upper stage of FIG. 5, if there is no communication disturbance, in the communication path R1, transmitted to the communication path R11 is the communication data W2 between the main arithmetic unit 100 and the brake microcomputer 82. Transmitted to the communication paths R12 and R14 is communication data W3 between the powertrain ECU 81 and the brake microcomputer 82.

Similarly, if there is no communication disturbance, in the communication path R2, transmitted to the communication paths R21 and R23 are: the communication data W6 between the main arithmetic unit 100 and the EPAS microcomputer 83; the communication data W1 between the main arithmetic unit 100 and the powertrain ECU 81; and the communication data W5 between the main arithmetic unit 100 and the wiper control microcomputer 62. Transmitted to the communication path R24 are the communication data W1 and W5. Transmitted to the communication path R25 is the communication data W5.

As shown in the lower stage of FIG. 5, at a communication disturbance in the communication path R21, the main arithmetic unit 100 stops the communications with the powertrain ECU 81 and the brake microcomputer 82. The main arithmetic unit 100 reduces the traffic between the main arithmetic unit 100 and the brake microcomputer 82 to expand a vacant communication band. In addition, the main arithmetic unit 100 transmits the communication data W1 between the main arithmetic unit 100 and the powertrain ECU 81 and the communication data W6 between the main arithmetic unit 100 and the EPAS microcomputer 83, which have been transmitted via the disturbed communication path R21, via the other communication path R1. This reduces the loss of the "cruise control" functions, which are the main functions, at a disturbance of a part of the on-board network. The transmission of the communication data W5 is stopped between the main arithmetic unit 100 and the wiper control microcomputer 62 based on the priority order.

The main arithmetic unit 100 causes the powertrain ECU 81 and the brake microcomputer 82 to establish communications between the powertrain ECU 81 and the brake microcomputer 82, which have been made via the communication paths R12 and R14, using the undisturbed communication paths R22, R23, and R24 of the communication path R2. This reduces the loss of the "cruise control" functions, which are the main functions, at a disturbance of a part of the on-board network. If included in the communication path R2, an alternative communication path to the communication path R1 can be utilized to reduce the traffic.

To sum up, the on-board network system according to the present embodiment includes the main arithmetic unit 100, the plurality of communication paths R1 to R4 extending radially from the main arithmetic unit 100, and the plurality of sub-arithmetic units 61 to 66 and 81 to 83 connected to the main arithmetic unit 100 via respective ones of the communication paths. The sub-arithmetic units 61 to 66 and 81 to 83 include the first sub-arithmetic units 65, 66, and 81 to 83 connected to the main arithmetic unit 100 via the plurality of communication paths R1 to R4. Set in advance to the communication paths R1 to R4 is the priority order according to the communication type. If a disturbance of a part of the communication paths R1 to R4 that communicate with the first sub-arithmetic units 65, 66, and 81 to 83 is found, the main arithmetic unit 100 reduces the communications having a priority lower than the predetermined criteria in the rest of the communication paths R1 to R4. The main arithmetic unit 100 assigns then, to the area with the reduced communications, communications having a priority higher than the predetermined criteria among the communications with the first sub-arithmetic units.

In this manner, the main arithmetic unit 100 and each of the first sub-arithmetic units 65, 66, and 81 to 83 are connected to each other via at least two of the communication paths R1 and R4. Even at a disturbance of one of the communication paths, communications can thus be established via the other communication path. If a communication disturbance is found in some of the communication paths, the traffic is adjusted in accordance with the priority order according to the communication type in the other undisturbed communication path(s) (i.e., the rest of the communication paths). That is, the communications having a priority lower than the predetermined criteria are reduced. Communications having a priority higher than the predetermined criteria among the communications between the main arithmetic unit and the first sub-arithmetic units are assigned to the area with the reduced communications. This reduces the loss of the main functions (e.g., the "cruise control" functions in the embodiment described above).

Note that how to set the "predetermined criteria" is not particularly limited. Whether information is necessary for fulfilling the necessary functions such as the safety or travel performance, for example, whether the element is necessary for continuing safe travel, may be the predetermined criteria. In particular, for example, as the predetermined criteria, whether the functions are necessary for stopping the vehicle 10 during traveling is the main criteria in the cruise control.

How to reduce the communications having a priority lower than the predetermined criteria is not particularly limited. For example, the traffic can be reduced by delaying the communication cycle, reducing the traffic per unit communication, and thinning the communications, increasing the thinning rate than before, for example, in accordance with predetermined criteria or a priority order.

In the embodiment described above, a connection path may be provided to connect different communication paths R1 to R4. Although not shown, for example, in FIG. 2, a connection path may be provided to connect the path R13 of the communication path R1 and the path R25 of the communication path R2. For example, in FIG. 2, a connection path may be provided to connect the path R33 of the communication path R3 and the path R43 of the communication path R4. By providing such connection paths, the number of first sub-arithmetic units can be increased among the sub-arithmetic units. In addition, the number of different communication paths can be increased which connect the main arithmetic unit and the first-sub arithmetic units.

### INDUSTRIAL APPLICABILITY

The technology disclosed herein is useful as an on-board network system.

### DESCRIPTION OF REFERENCE CHARACTERS

- 51: Powertrain Device
- 52: Brake System
- 53: Electric Power Steering System
- 61: Light Control Microcomputer (Sub-Arithmetic Unit)
- 62: Wiper Control Microcomputer (Sub-Arithmetic Unit)
- 63: Left Door Control Microcomputer (Sub-Arithmetic Unit)
- 64: Right Door Control Microcomputer (Sub-Arithmetic Unit)
- 65: Left Monitoring Device (Sub-Arithmetic Unit)
- 66: Right Monitoring Device (Sub-Arithmetic Unit)
- 81: Powertrain ECU (Sub-Arithmetic Unit)
- 82: Brake Microcomputer (Sub-Arithmetic Unit)
- 83: EPAS Microcomputer (Sub-Arithmetic Unit)
- 100: Main Arithmetic Unit
- 110: Storage Unit (Storage Device)
- R1, R2, R3, R4: Communication Path

## Claims

1. An on-board network system comprising:
a main arithmetic unit configured to perform an arithmetic calculation related to traveling of a vehicle;
a plurality of communication paths extending in different directions from the main arithmetic unit toward respective portions of a body of the vehicle;
a plurality of sub-arithmetic units on the communication paths, each of the sub-arithmetic units being configured to control an on-board device to be controlled;
a storage device storing a priority order of communications according to a type of communication data transmitted through the communication paths;
at least one of the sub-arithmetic units being connected to the main arithmetic unit via different two of the communication paths; and
the main arithmetic unit being configured to, at a disturbance of one of the communication paths connected to the one of the sub-arithmetic units, reduce communications having a priority lower than a predetermined criterion and assign, to the area with the communications reduced, communication data having a priority higher than the predetermined criterion among the communication data transmitted in the one of communication paths disturbed, to continue communications in the other communication paths.

2. The on-board network system of claim 1, further comprising:
a connection path connecting ones of the communication paths connected to different ones of the sub-arithmetic units in positions away from the main arithmetic unit.

3. The on-board network system of claim 1 or 2, wherein
the one of the sub-arithmetic units controls at least one of on-board devices related to cruise control including a powertrain device, a brake system, and an electric power steering system.

4. The on-board network system of any one of claims 1 to 3, wherein
in the priority order of communications, communication data for cruise control including at least one of braking control, steering control, and driving control of a vehicle has a higher priority, whereas communication data for controlling a body-related device has a lower priority.
